Europäisches Patentamt

European Patent Office

Office européen des brevets

(19)

(11) **EP 0 456 974 B1**

(12) # EUROPEAN PATENT SPECIFICATION

(45) Date of publication and mention
of the grant of the patent:
**02.05.1997 Bulletin 1997/18**

(51) Int Cl.⁶: **H04J 3/06**, H04L 7/04

(21) Application number: **91102983.3**

(22) Date of filing: **28.02.1991**

(54) **Method and apparatus for generating and detecting distributed block synchronization**

Verfahren und Anordnung zur Erkennung und Erzeugung von verteilter Blocksynchronisation

Procédé et dispositif de génération et de reconnaissance de blocs de synchronisation distribués

(84) Designated Contracting States:
**AT BE CH DE DK ES FR GB GR IT LI LU NL SE**

(30) Priority: **12.05.1990 GB 9010724**

(43) Date of publication of application:
**21.11.1991 Bulletin 1991/47**

(73) Proprietor: **MOTOROLA A/S**
**DK-2300 Copenhagen S (DK)**

(72) Inventors:
• **Jakobsen, Ken**
**Copenhagen 2100 (DK)**
• **Jensen, Robert**
**Vallensbek 2625 (DK)**
• **KRISTIANSEN, Jens Anker**
**2880 Bagsvaerd (DK)**

(74) Representative: **Lupton, Frederick et al**
**Motorola European Intellectual Property,**
**Midpoint,**
**Alencon Link**
**Basingstoke, Hampshire RG21 1PL (GB)**

(56) References cited:
• **PATENT ABSTRACTS OF JAPAN vol. 10, no. 95**
**(E-395)(2152) 12 April 1986 & JP-A-60 236 535**
• **IEEE TRANSACTIONS ON AEROSPACE AND**
**ELECTRONIC SYSTEMS vol. 4, no. 4, New York,**
**US, July 1968, pp. 551-556; L. I. BLUESTEIN:**
**'INTERLEAVING OF PSEUDORANDOM**
**SEQUENCES FOR SYNCHRONIZATION'**
• **INSTITUTE OF ELECTRICAL AND ELECTRONIC**
**ENGINEERS, INTERNATIONAL CONFERENCE**
**ON COMMUNICATIONS, New York, June 11-13,**
**1973, pp. 23-16 - 23-17; Charles C. KILGUS:**
**'PSEUDO-NOISE CODE ACQUISITION USING**
**MAJORITY LOGIC DECODING'**
• **PATENT ABSTRACTS OF JAPAN vol. 8, no. 25**
**(E-225) 2 February 1984 & JP-A-58 188 948**

**Description**

Background of the Invention

This invention relates to apparatus and a method for generating and detecting a synchronization sequence which is distributed within blocks of received data, for the purpose of synchronizing to the received blocks.

When receiving a data signal by radio, there is a constant risk of losing synchronization. If synchronization is lost, some means must be provided to regain information about where the block boundaries of the data are located. For example, if transmitting ASCII characters, it must be possible to gather data in 8 bit blocks. To do this one could transmit a known pattern with regular intervals. However, if this pattern is of long duration, the data must be stored in a large FIFO buffer to secure a steady flow of data. Furthermore, if there is a large time gap between the synchronization patterns, the opportunities for re-sychronization will be distributed at large intervals.

Summary of the Prior Art

Known data transmission formats, such as the Motorola Securenet (trade mark) radio format, use a synchronization sequence to mark the start of each block. 256 bits of synchronization are used every 6144 bits of transmission. (Similarly, in the GSM cellular radio format, a Barker synchronization sequence of 33 bits is used for each block or telegram of approximately 1100 bits.) This means that if synchronization is lost, e.g. through passing under a bridge, potentially a large block of data can be lost. On the other hand, if the blocks are made smaller, the penalty is a lower data transfer speed, because a larger fraction of the transmitted signal is taken up with the synchronization sequence.

In the field of test equipment for analysing the performance of digital data communications systems, the 1645A data error analyser manufactured by Hewlett-Packard Inc uses an ML sequence (maximum length shift register sequence) for generating pseudo-random data. An ML sequence is a particular case of linear feedback sequence which can be generated from a shift register of length N. The nature of such sequences is that the next bit of the sequence can be calculated from the size of the shift register N, the feedback circuit and N bits of the past. This means that if there are no errors, and if the last received bit (bit (T)) is part of the block separation sequence, then the following relation is true:

$$\texttt{bit(t)} \ = \ \sum_{\texttt{i=1}}^{\texttt{N}} \texttt{f}_{\texttt{i}} \texttt{.bit(t-(M+1).i)}$$

where

$$\sum_{\texttt{i=1}}^{\texttt{N}} \texttt{x}_{\texttt{i}} \ = \ \texttt{x}_{\texttt{1}} \ + \ \texttt{x}_{\texttt{2}} \ + \ . \ . \ . \ + \ \texttt{x}_{\texttt{N-1}} \ + \ \texttt{x}_{\texttt{N}}$$

and $f_i$ are the feedback coefficients.

It is also known from JP-A-60-236535 to use a linear feedback sequence to create distinguishable frame markers, wherein the number of different markers equals the length of the sequence.

It is further known to transmit pseudo-random sequences for timing purposes.

It is an object of the present invention to provide an improved signalling protocol.

Summary of the Invention

According to the present invention, there is provided apparatus for generating a communications signal comprising:
means for generating a linear feedback sequence, characterised by means for inserting bits of the sequence into a data stream, one bit at a time, interspersed with data at equal bit intervals.

There is also provided apparatus for detecting a linear feedback sequence which is interspersed with data in a data stream in single bits at a constant bit interval, comprising means for testing a first set of bits separated from each other by data at multiples of said interval to determine whether the bits satisfy a pre-determined relationship which applies to the linear feedback sequence, shift means for shifting the set of bits to be tested relative to the testing means so as to test another set of bits separated from each other in the same manner as the first set, and means for determining the location of the sequence in the data stream when the pre-determined relationship is satisfied by a set of bits tested.

For the purposes of each test, the data which separates the bits to be tested is disregarded.

The invention also provides a method of detecting a synchronization sequence in data which is arranged in blocks, each block having a pre-determined number of bits and a synchronization bit, and each synchronization bit being located at the same position within its block. First, because the linear feedback sequence is interspersed within the data stream one bit at a time, for the same data transfer rate, the bits of the sequence can be spaced at shorter intervals than has been the case with prior art block separation marks. Second, because the blocks are smaller, smaller shift registers can be used to store them, thereby saving cost. The more frequent occurrence of the block separation marks also allows for more frequent opportunities for re-synchronization, so that if synchronization is lost, the amount of the data which is lost before re-synchronization occurs can be reduced.

In a further aspect of the invention, signalling data is distributed regularly throughout the data stream. The signalling data is preferably used for identifying an encryption key, for example from a selection of predetermined encryption keys. It may also be used for digital selective calling, pilot tone signalling, repeater access and general system control.

The combination of distributed block synchronization and embedded signalling provides an improvement over systems which have signalling at the start of transmission, because the distributed block synchronization facilitates late-entry (ie synchronization after the start of transmission) and the embedded signalling can be recovered at any time during the transmission.

Brief Description of the Drawings

Figure 1 shows a circuit for generating a linear feedback sequence, in this case a maximum length sequence;
Figure 2 shows a diagram of the block separation signalling protocol of the invention;
Figure 3 shows a block diagram for detecting the sequence of Figure 2; and
Figure 4 shows a part of the test for detecting the sequence of Figure 2.

Detailed Description of a Preferred Embodiment

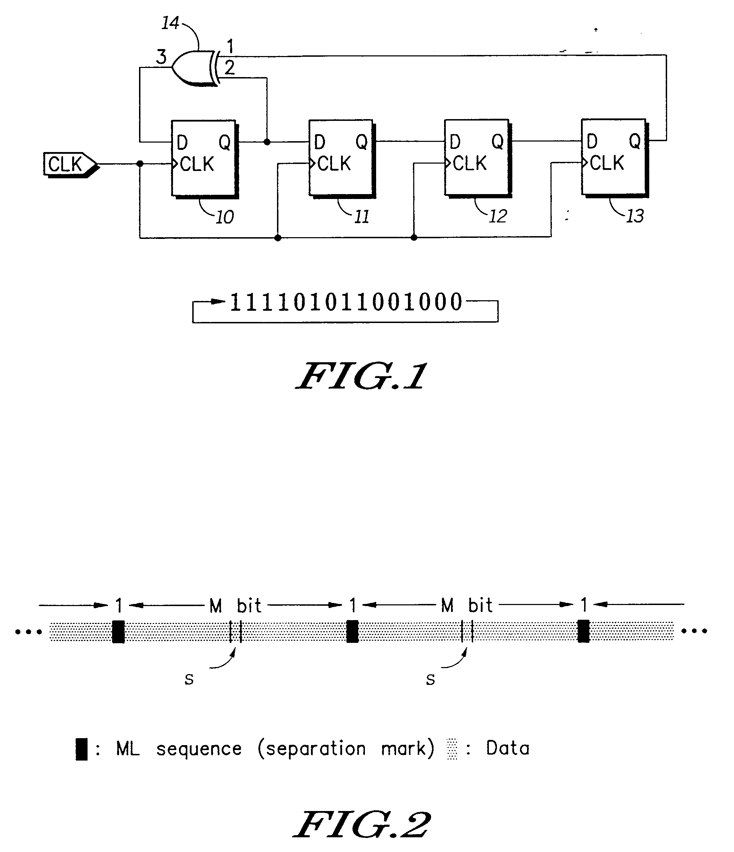

Referring to Figure 1, the circuit shown is used for generating the cyclical maximum length linear feedback sequence 111101011001000. This sequence is used in the preferred embodiment of the invention. Elements of the circuit are represented by their standard symbols, and no further explanation of the circuit is considered necessary.

Instead of the circuit of Figure 1, a number of variations thereon could be used. For example, the shift register formed by the four flip-flops shown could be shorter or longer. If there are five flip-flops instead of four, the length of the ML sequence is 31 bits. The length of an ML sequence is always $2^N-1$, when N is the number of flip-flops in the shift register. In the circuit shown in Figure 1, the shift register formed by flip-flops 10 to 13 has a single tap between flip-flops 10 and 11. Any number of taps can be used, up to N-1, all being fed into a multiple input Exclusive OR gate.

A version of the circuit of Figure 1 is also used for testing a received bit stream. The output from Exclusive OR gate 14 is compared with the bits of the data as they are received. Each time a new bit is received, the flip-flops 10 to 13 are clocked once. The relationship set out on page 2 of this specification will hold if each received bit is part of the sequence. If the last bit received is not part of the sequence, the relation will only be true with a probability of 50%. Such is the case if the data bits received are considered to be random. With this equation, it is also easy to see what happens if the channel by accident inverts all data bits. If the number of taps $f_i$ is odd, the relation still holds. (If the number of taps is odd, then the generating polynomial can not be primitive, and hence the sequence can not be ML.) However, the principle will also work if the sequence is not ML, only the shift register must be larger than in the ML case, and the feedback must be chosen with care. If the number of taps is even, the relation never holds. This means that if a feedback circuit with an even number of taps is chosen, it is possible to determine whether the channel inverts all bits, and hence it is possible to correct errors in polarity. If the goal is only to detect the presence of the sequence, the best choice of polynomial is a polynomial with an odd number of taps, since error in polarity will not influence the test.

The circuit described gives a tool to check whether each bit as it is received could be part of the sequence.

In accordance with the present invention, the bits of sequence shown in Figure 1 are interspersed, one at a time into a data stream at intervals of 64 bits, as shown in Figure 2. The bits of the sequence act as block separation marks. There are 63 bits between the block separation marks (M = 63). Also shown in Figure 2 are signalling bits S. There is shown one such bit in the centre of each block. Clearly there could be a number of such bits, positioned anywhere in the block and not necessarily adjacent each other. The receiver circuitry is able to identify these bits by their positions relative to the block separation marks of the ML sequence.

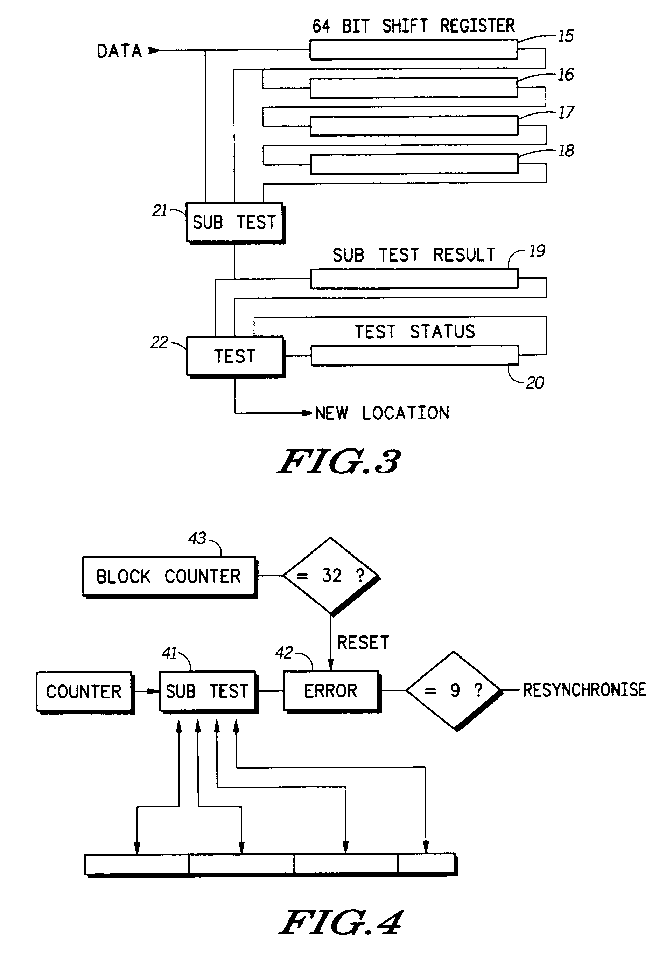

The complete circuit for detecting the position of the block separation marks within the data is shown in Figure 3. In this Figure, there are six 64-bit shift registers, 15 to 20 and two exclusive or gates 21 and 22. The shift registers 15 to 18 perform the function of flip-flops 10 to 13 of Figure 1 and the Exclusive OR gate 21 performs the function of the Exclusive OR gate 14 of Figure 1, with the additional function of comparing the output of register 18 with the incoming data. When 256 bits have been clocked into the registers 15 to 18, the following test can be carried out:

$$NB = NB_{z-1} \; EXOR \; NB_{z-4},$$

where NB is the new bit to be tested and $NB_{z-1}$ and $NB_{z-4}$ are the bits occupying the same position in the blocks which were located 1 and 4 blocks respectively in the past.

The test does not guarantee that this is the correct position, even if the test is successful, since there is a probability of 50% that the test will be successful, even if it is not the correct position.

A further possibility that must be accounted for is that the data on the channel is inverted. If this is the case, the relationship $NB = NB_{z-1}$ EXOR $NB_{z-4}$ will <u>never</u> be satisfied. The inverted ML sequence will satisfy the relationship NB $\neq NB_{z-1}$ EXOR $NB_{z-4}$. There is no way of detecting an inverted channel with only one test as described above. The result of a sub-test is output from Exclusive OR gate 21. If the incoming data bit is equal to the bit which would be predicted by the linear feedback circuit, the output from sub-test 21 will be "1". This is fed into sub-test result shift register 19. Shift register 19 will contain a "1" for each location within 64 sequential locations which are candidates for the location of the block marker. Locations which failed the sub-test have effectively been eliminated from consideration. Exclusive OR gate 22 tests whether a location passes the test a second time round. The output from test 22 is fed to test status register 20. The test status register records the results of the sub-tests over 16 sub-tests. If all have failed, the contents of test status register 20 for that location will be "1". If all have succeeded the content of test status register 20 for that location will also be "1". Otherwise, a "zero" will be stored in test status register 20 for that location. Thus, test status register 20 will only contain a "1" for the location which contains the ML sequence for the inverted ML sequence. This location is output from test 22 and the rest of the receiver circuitry is able to synchronize to this location. Thus, the receiver circuitry can determine where to look within a block for particular bits of information and/or to synchronize decryption apparatus to the incoming bit stream.

Sixteen repetitions of the sub-test are selected as a compromise between low falsing probability and high detection probability. These probabilities are:

$$P_{falsing} = 1 - (1 - 0.5^{B})^{M}$$

$$P_{detection} = (1 - BER)^{B}$$

where B is the number of blocks, M the block length and BER the bit error rate (it is assumed that the data shift registers are already filled at the start of the test).

The choice is made to 16 blocks, but this does not give a satisfactory detection probability. Provided the first test has been successful once (i.e. there is a single "1" in register 20), the block separation is locked to this position, the registers 19 and 20 are reset and the complete test is repeated. If the second test fails for the locked position, a new position is determined in accordance with the results of the second test. The second test is based on the same principle as the first test, and is of the generalised type. The second test allows 9 sub-test errors out of 32 bits. This is achieved by means of counter 24, which counts the ones from Exclusive OR gate 21. Each successful result of sub-test 21 above 1 represents an error. Counter 24 is re-set every 32 bits.

It is possible to allow errors in the second test, because by means of the first test the polarisation of the channel has already been determined. The polarisation is determined by comparing the "1" in test status register 20 with the corresponding bit in sub-test result 19. If the corresponding bit in register 19 is a "1", the polarity is positive, but if it is a "zero", the polarity is negative. This is easily explained by the fact that a "zero" in register 19 (failure of sub-test) will only give rise to a "1" in register 20 if the sub-test has failed every time for that location. Failure of the sub-test on every occasion indicates that the inverted ML sequence is present at that location.

The second test is illustrated in Figure 4.

Once the separation mark location indicator has been locked, that location is tested for each subsequent block. If the bit received at that location in each subsequent block is not the predicted bit from the sequence, the sub-test 41 registers an error to error counter 42. Error counter 42 is re-set every 32 blocks by block counter 43. If error counter 42 reaches 9, an overall error is registered and the entire synchronization routine is repeated.

Once synchronization has been determined, the signalling bits S of Figure 2 can be identified. These bits are used to identify a key from a selection of eight encryption keys pre-programmed in the receiver. Once the key has been selected, the rest of the data can be decrypted using this key. Of course, in the decryption process, the position of each bit of the data is paramount. The position is determined from the block separation marks.

For eight pre-programmed encryption keys and only one signalling bit per block, three signalling bits must be received. The associated three blocks of data are stored until the correct key is determined and then decoded. If automatic encryption key selection is not used or if each block contains at least three signalling bits, the data can be decrypted as soon as synchronization has been achieved. The need for storage of received blocks is in that case not so great.

## Claims

1. A method for providing synchronization in a data stream, comprising the steps of:

   generating a sequence of synchronization bits according to a linear feedback sequence; and
   inserting the sequence of synchronization bits into the data stream, such that the synchronization bits are interspersed, one bit at time, among data bits at equal bit intervals.

2. The method of claim 1 wherein the step of generating comprises the step of generating synchronization bits from a maximum length shift register sequence.

3. Apparatus for detecting a linear feedback sequence which is interspersed with data in a data stream in single bits at a constant bit interval, comprising

   means (21) for testing a first set of bits separated from each other by data at multiples of said interval to determine whether the bits satisfy a predetermined relationship which applies to the linear feedback sequence, shift means (15, 16, 17, 18) for shifting the set of bits to be tested relative to the testing means so as to test another set of bits separated from each other in the same manner as the first set, and means for determining the location of the sequence in the data stream when the predetermined relationship is satisfied by a set of bits tested.

4. Apparatus according to claim 3, further comprising means (19) for storing an indication of the predetermined relationship having been satisfied by a set of bits tested, means (22) for changing that indication if the predetermined relationship is not satisfied by further bits in the same set and means (20) for storing an accumulation of the indications over a plurality of tests.

5. Apparatus according to claim 3 or 4, further comprising means for determining the location of signalling bits relative to the location of said sequence and means for controlling the reception of the remainder of the data stream in accordance with the signalling bits.

6. Apparatus according to claim 5, further comprising means for storing a plurality of predetermined encryption keys, means for selecting an encryption key in accordance with the signalling bits and means for decrypting data from the data stream in accordance with the selected key.

7. A method of detecting a synchronization sequence in data which is arranged in blocks, each block having a predetermined number of bits and a synchronization bit, and each synchronization bit being located at the same position within its block, the method comprising the steps of:
   testing whether the equation

   $$NB = NB_{z-a} \text{ EXOR } NB_{z-b}...\text{EXOR } NB_{z-n}$$

   is true for each bit in a block, where NB is a new bit to be tested, and $NB_{z-a}$ and $NB_{z-b}$ are the bits occupying the same position in the blocks which were located a and b blocks respectively in the past;
   repeating the test for further blocks and after a plurality of tests, determining the position of the synchronization bit within the blocks.

8. A method according to claim 7, wherein NB is compared with the Exclusive OR combination of an odd number of previous bits.

9. A method according to claim 7, wherein one or more errors are allowed in the plurality of tests.

**Patentansprüche**

1. Verfahren zum Schaffen von Synchronisation in einem Datenstrom, mit den Schritten:

   Erzeugen einer Sequenz von Synchronisationsbits gemäß einer Linear-Rückkoppelsequenz; und
   Einsetzen der Sequenz von Synchronisationsbits in den Datenstrom, so daß die Synchronisationsbits jeweils einzeln mit gleichen Bitabstanden unter den Datenbits eingestreut sind.

2. Verfahren nach Anspruch 1, bei dem der Erzeugungsschritt den Schritt des Erzeugens von Synchronisationsbits aus einer Maximallängen-Schieberegister-Sequenz umfaßt.

3. Vorrichtung zum Erfassen einer Linear-Rückkoppelsequenz, die als Einzelbits in Daten eines Datenstromes mit einem konstanten Bitintervall eingestreut ist, welche Vorrichtung umfaßt

   Mittel (21) zum Überprüfen eines ersten Satzes von Bits, die voneinander durch Daten getrennt sind mit einem Vielfachen des zu bestimmenden Intervalls, um zu bestimmen, ob die Bits eine vorgegebene Beziehung erfüllen, die bei der Linear-Rückkoppelsequenz zutrifft,
   Schiebemittel (15, 16, 17, 18) zum Verschieben der zu überprüfenden Bitfolge relativ zum Überprüfungsmittel, um so einen anderen Satz von Bits zu überprüfen, die voneinander in der gleichen Weise wie bei dem ersten Satz getrennt sind, und
   Mittel zum Bestimmen des Ortes der Sequenz in dem Datenstrom, wenn die vorgegebene Beziehung durch einen Satz überprüfter Bits erfüllt ist.

4. Vorrichtung nach Anspruch 3, die weiter umfaßt Mittel (19) zum Speichern einer Anzeige, daß die vorgegebene Beziehung durch einen Satz überprüfter Bits erfüllt wurde, Mittel (22) zum Ändern der Anzeige, falls die vorgegebene Beziehung durch weitere Bits im gleichen Satz nicht erfüllt wird, und Mittel (20) zum Speichern einer Ansammlung der Anzeigen über eine Vielzahl von Überprüfungen.

5. Vorrichtung nach Anspruch 3 oder 4, die weiter umfaßt Mittel zum Bestimmen des Ortes von Signalisierungsbits relativ zum Ort der Sequenz und Mittel zum Steuern des Empfangs des restlichen Datenstromes gemaß den Signalisierungsbits.

6. Vorrichtung nach Anspruch 5, die weiter umfaßt Mittel zum Speichern einer Vielzahl von vorgegebenen Verschlüsselungen, Mittel zum Auswählen einer Verschlüsselung gemaß den Signalisierungsbits und Mittel zum Entschlüsseln von Daten aus dem Datenstrom gemaß der ausgewählten Verschlüsselung.

7. Verfahren zum Erfassen einer Synchronisationssequenz in Daten, die in Blöcken angeordnet sind, von denen jeder Block eine vorgegebene Anzahl von Bits und ein Synchronisationsbit besitzt und jedes Synchronisationsbit an der gleichen Position innerhalb seines Blockes angeordnet ist, welches Verfahren die Schritte umfaßt: Überprüfen, ob die Gleichung

$$NB = NB_{z-a} \text{ EXOR } NB_{z-b} \ldots \text{EXOR } NB_{z-n}$$

für jedes Bit in einem Block zutrifft, wobei NB ein neues zu überprüfendes Bit ist und $NB_{z-a}$ und $NB_{z-b}$ die Bits sind, welche die gleiche Position in den Blöcken einnehmen, die jeweils vorher als a- und b-Blöcke angeordnet waren; Wiederholen der Überprüfung für weitere Blöcke und, nach einer Vielzahl von Überprüfungen, Bestimmen der Position des Synchronisationsbits innerhalb der Blöcke.

8. Verfahren nach Anspruch 7, bei dem NB mit der EXKLUSIV-ODER-Kombination einer ungeraden Zahl von vorherigen Bits verglichen wird.

9. Verfahren nach Anspruch 7, bei dem ein oder mehrere Fehler in der Vielzahl von Überprüfungen zugelassen wird/werden.

**Revendications**

1. Procédé permettant de fournir une synchronisation dans un flux de données et comprenant les étapes suivantes :

   génération d'une séquence de bits de synchronisation selon une séquence de rétroaction linéaire ; et insertion de la séquence de bits de synchronisation dans le flux de données, de telle façon que les bits de synchronisation sont intercalés, un bit à la fois, parmi les bits de données à des intervalles binaires égaux.

2. Procédé selon la revendication 1, dans lequel l'étape de génération comprend l'étape de génération de bits de synchronisation à partir d'une séquence de registre à décalage de longueur maximum.

3. Appareil permettant de détecter une séquence de rétroaction linéaire qui est intercalée avec les données dans un flux de données en bits uniques, à des intervalles binaires constants, et comprenant :

   un moyen (21) permettant de tester un premier ensemble de bits séparés les uns des autres par des données à des intervalles multiples desdits intervalles pour déterminer si les bits satisfont une relation déterminée à l'avance qui s'applique à la séquence de rétroaction linéaire,
   un moyen de décalage (15, 16, 17, 18) permettant de décaler l'ensemble de bits à tester par rapport au moyen de test de façon à tester un autre ensemble de bits séparés les uns des autres de la même façon que le premier ensemble, et
   un moyen permettant de déterminer l'emplacement de la séquence dans le flux de données lorsqu'un ensemble de bits testé satisfait la relation déterminée à l'avance.

4. Appareil selon la revendication 3, comprenant en outre un moyen (19) permettant de mémoriser une indication de la relation déterminée à l'avance et qui a été satisfaite par un ensemble de bits testés, un moyen (22) permettant de changer cette indication si la relation déterminée à l'avance n'a pas été satisfaite par d'autres bits dans le même ensemble et un moyen (20) permettant de mémoriser une accumulation des indications sur une pluralité de tests.

5. Appareil selon la revendication 3 ou 4, comprenant en outre un moyen permettant de déterminer l'emplacement des bits de signalisation par rapport à l'emplacement de ladite séquence et un moyen permettant de commander la réception du reste du flux de données selon les bits de signalisation.

6. Appareil selon la revendication 5, comprenant en outre un moyen permettant de mémoriser une pluralité de clés de chiffrement déterminées à l'avance, un moyen permettant de sélectionner une clé de chiffrement selon les bits de signalisation et un moyen permettant de déchiffrer les données à partir du flux de données selon la clé sélectionnée.

7. Procédé permettant de détecter une séquence de synchronisation dans des données qui sont agencées en blocs, chaque bloc présentant un nombre déterminé à l'avance de bits et un bit de synchronisation, et chaque bit de synchronisation étant situé à la même position à l'intérieur de son bloc, le procédé comprenant les étapes suivantes :
   test de l'équation

   $$NB = NB_{z-a} \text{ EXOR } NB_{z-b...} \text{ EXOR } NB_{z-n}$$

   pour savoir si elle est valable pour chaque bit dans un bloc, où $NB$ est un nouveau bit à tester, et $NB_{z-a}$ et $NB_{z-b}$ sont des bits occupant la même position dans les blocs qui sont situés aux blocs a et b, respectivement, dans le passé ;
   répétition du test pour d'autres blocs et après une pluralité de tests, détermination de la position du bit de synchronisation à l'intérieur des blocs.

8. Procédé selon la revendication 7, dans lequel $NB$ est comparé à la combinaison OU Exclusif d'un nombre impair de bits précédents.

9. Procédé selon la revendication 7, dans lequel une ou plusieurs erreurs sont autorisées dans la pluralité de tests.

## FIG.1

■ : ML sequence (separation mark)   ░ : Data

## FIG.2

64 BIT SHIFT REGISTER _— 15

DATA ►

— 16

— 17

— 18

21 ⌐ SUB TEST

SUB TEST RESULT ⌐ 19

22 — TEST | TEST STATUS

— 20

► NEW LOCATION

## FIG.3

43

BLOCK COUNTER | = 32 ?

RESET

41 42

COUNTER ► SUB TEST | ERROR | = 9 ? — RESYNCHRONISE

## FIG.4